(19) Europäisches Patentamt
European Patent Office
Office européen des brevets

(11) Publication number : **0 497 827 B1**

(12) # EUROPEAN PATENT SPECIFICATION

(45) Date of publication of patent specification : **08.06.94 Bulletin 94/23**

(51) Int. Cl.$^5$ : **C09K 5/06**

(21) Application number : **90915805.7**

(22) Date of filing : **24.10.90**

(86) International application number : **PCT/GB90/01634**

(87) International publication number : **WO 91/06612 16.05.91 Gazette 91/11**

(54) **THERMAL STORAGE MEDIUM.**

(30) Priority : **27.10.89 GB 8924232**

(43) Date of publication of application : **12.08.92 Bulletin 92/33**

(45) Publication of the grant of the patent : **08.06.94 Bulletin 94/23**

(84) Designated Contracting States : **AT BE CH DE DK ES FR IT LI LU NL SE**

(56) References cited :
**EP-A- 0 034 710**
**EP-A- 0 063 348**
**EP-A- 0 103 450**
**EP-A- 0 126 396**
**EP-A- 0 353 044**
**DE-A- 3 300 475**
**US-A- 4 253 983**
**US-A- 4 326 975**

(73) Proprietor : **CLULOW, Malcolm George**
**7 Fieldfare Court, Spennells Valley**
**Kidderminster DY10 4TT (GB)**
Proprietor : **WINNETT, David Frederick**
**454 Redhill Road**
**King's Norton Birmingham B38 9EL (GB)**

(72) Inventor : **CLULOW, Malcolm George**
**7 Fieldfare Court, Spennells Valley**
**Kidderminster DY10 4TT (GB)**
Inventor : **WINNETT, David Frederick**
**454 Redhill Road**
**King's Norton Birmingham B38 9EL (GB)**

(74) Representative : **Cowan, David Robert et al**
**E.N. Lewis & Taylor**
**5 The Quadrant**
**Coventry CV1 2EL (GB)**

EP 0 497 827 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to thermal storage media and in particular to thermal storage media having a high thermal storage capacity for a range of applications.

It has been proposed to utilise thermal storage medium for a range of applications from storage of heat at relatively high temperatures for heating purposes and at relatively low temperatures for air conditioning and other low temperature uses.

In selecting a thermal storage medium there are a number of related factors to consider, amongst which is the storage capacity of the medium which capacity is related to the specific heat and, sometimes, the latent heat, if a phase change of the medium is involved. For example water may be used as a storage medium. Water has a high specific heat and in the phase change to ice or steam a high latent heat is involved. Water also is safe in use. However utilisation of the latent heat characteristics of water usually requires that the temperature range over which it is used includes a phase change. When the temperature range desired is, say, below the freezing point of water such latent heat characteristics cannot be utilised.

Other thermal storage media have also been used but they have often involved large masses of the material because of their low specific heat characteristics and/or the inability to use any latent heat characteristics of the material.

A wide range of applications awaits any improved thermal storage medium. Such a medium would open up applications in which intermittent cold or heat supply is required. A source of cold or heat could then be used to supply the thermal storage medium at a substantially constant rate and the cold or heat could be abstracted on an intermittent basis according to demand.

For example an air conditioning system which requires cooling at peak demand for a few hours per day could be supplied by a refrigeration system operating at substantially constant rate below peak demand, peak demand being supplied in part from the refrigeration system and in part from a thermal storage unit.

However in order for the thermal storage unit to be effective it should be compact which means it must have a high thermal storage capacity per unit volume. It should also be cost effective and include relatively low cost materials. Preferably the unit should not include toxic materials, that is the materials should not have high alkalinity or acidity, give off toxic vapours and should otherwise not be a hazard to the environment.

An object of the invention is to provide a thermal storage medium and method which provides an enhanced thermal storage capacity greater than that which is possible from the contribution of latent heat and/or specific heat of the medium.

According to one aspect of the invention a method of storing thermal energy comprises passing fluid in heat exchange relationship through a mass of thermal storage medium including activated alumina combined with an aqueous medium at a temperature whereby to cause the water content of the aqueous medium to be associated with and disassociated from the alumina in an enthalpy change. Conveniently the water content of the aqueous medium constitutes up to 100% by weight of the alumina. Preferably the water content is less than 70% by weight. The temperature may be in a range of up to 200°C, preferably up to 170°C.

The aqueous medium may be substantially wholly water or water combined with another material, for example one which affects the temperature at which a phase change of the medium takes place. Such material may be selected from glycol, sodium chloride, clathrates or the like.

Activated alumina is normally formed by subjecting aluminium trihydroxide to heat generally to the overall equation:-

$$2Al\,(OH)_3 \rightleftharpoons Al_2 + 3H_20$$

to derive the activated alumina. It has been found that activated alumina is capable of being associated and disassociated with water by the addition or removal of heat in the presence of water.

The upper temperature limit of the heat exchange medium is preferably below 170°C to ensure that the activated alumina does not begin to be converted to sintered alumina in which form the desired enthalpy change is absent.

If the desired temperature range for the thermal storage medium is in excess of the vaporisation temperature of the aqueous medium the medium may be maintained under pressure to inhibit such vaporisation.

Other materials may be incorporated into the thermal storage medium such as powdered sintered alumina which may be interspersed within voids between the activated alumina particles, sintered alumina having a high conductivity and specific heat, but without the benefit of enthalpy for the medium.

The temperature range may include a temperature at which the mass fuses to thereby obtain further thermal storage benefit arising from the latent heat of fusion.

The invention also provides a thermal storage medium for a thermal storage system comprising activated alumina and an aqueous medium intimately associated with the alumina of which the water content of the aqueous medium may be in the proportion 10-100% by weight of the activated alumina or, preferably, 20-80% by

weight. At low proportions of aqueous medium there is insufficient water for take up by the alumina. At high proportions there is more water than can be taken up by the alumina. But the proportion of aqueous medium will differ according to the temperature range to be utilised.

The activated alumina may be in divided particulate, granular or spheroidal form having a size in the range 1mm to 10cms, preferably 4mms. Conveniently the alumina is F1, F200, T60, T162 or CPN alumina obtainable from Aluminium Company of America (Alcoa) and is porous to the water content of the aqueous medium.

According to a further aspect of the invention there is provided a thermal storage system comprising a mass of thermal storage medium enclosed within an envelope or container and having heat exchange means whereby heat is exchanged with said mass of thermal storage medium, the thermal storage medium comprising activated alumina and aqueous medium in intimate association with the alumina, whereby upon heat exchange with the mass thermal energy is transferred to and from the mass utilising enthalpy in the mass.

Preferably the container is an insulated container for the thermal storage medium and includes conduits for heat exchange fluid material to pass through the thermal storage medium.

The thermal storage medium of the invention has a relatively high specific heat and thermal conductivity. Moreover in raising and lowering the temperature of the medium the thermal storage capacity of the medium is in excess of that expected from a specific heat calculation alone. This is due to the enthalpy arising from chemical changes occurring between the activated alumina and the water content of the medium which results in the exchange of relatively large quantities of heat when a heat exchange is set up. Thus the chemical changes result in exothermic and endothermic reactions within the medium.

The chemical changes are wholly reversible at least over certain temperature ranges which means that the medium can be used as a thermal storage medium in which thermal energy is constantly and cyclically added to and subtracted from the medium.

The chemistry of the exothermic and endothermic chemical reactions of the medium remains to be fully evaluated but it appears it is connected with the reaction between the activated alumina and the water molecules and it involves ion exchange. It is believed that the exothermic and endothermic reactions occur over a range of temperatures from well below the freezing point of the water. Surprisingly even when the water or other aqueous medium is in solid form the chemical reaction takes place when the medium changes in temperature. The endothermic changes occur at somewhat different temperatures from the exothermic changes but, providing the utilised temperature range involves both reactions, the chemical change is reversed.

The thermal storage medium is chemically non-toxic, plentiful and relatively cheap to obtain.

The thermal storage medium may include only water as the aqueous medium in which case if the temperature range of the heat exchange application covers 0°C the full benefit of using the latent heat of fusion of the water is utilised. By adding other materials to the water the temperature at which fusion takes place can be varied and the most useful temperature range can be obtained. Thus the aqueous medium can be brine to lower the fusion temperature. Glycol can also be added for the same purpose. Other additives which can be useful in this respect include sodium sulphates and clathrates. It will be appreciated that the thermal storage capacity of the medium can be improved by the use of such aqueous medium depending on the application, but particularly in cases in which the thermal storage medium is to be used at low temperatures for refrigeration, air conditioning and similar purposes.

In the case of refrigeration a source of heat exchange fluid may be refrigeration means and the fluid acts as a coolant when the thermal storage medium is to be cooled. When the cold in the medium is to be abstracted the coolant or another fluid can be used to remove stored coldness from the medium. This would normally occur when the demand for refrigeration exceeds the capacity of the refrigeration means.

Thus the refrigeration capacity of the refrigeration means may be substantially less than the maximum refrigeration requirement of the system and such refrigeration requirement is provided for limited periods by the thermal storage system. During periods of low or zero refrigeration requirement the refrigeration means is able to operate to cool the mass of medium to replenish the source of refrigeration. Thus refrigeration means is provided which may be a capacity substantially less than the peak requirement but which is, through the thermal storage medium, able to satisfy peak requirements.

For example a refrigeration plant may have a requirement of say 100kw for 8 hours in 24 hours, the requirement during the remaining 16 hours being zero. Instead of having a 100kw capacity refrigeration plant to meet this requirement the plant may have a capacity of $33^1$/kw and operates for 24 hours i.e. continuously.

During a refrigeration requirement of 100kw the capacity is provided at $66^2$/3kw from the thermal storage medium and at $33^1$/3kw from the refrigeration plant.

The mass of thermal storage medium may be a combination of different materials each of which contributes to providing the desired thermal properties over the range of temperature required. Such materials may be contained in the form of a cell or enclosed body of material through which a heat exchange medium is passed either to cool or to be cooled depending on the mode of operation of the system. During the passage of the

heat exchange fluid the thermal storage medium is cooled or warmed and the aqueous medium may change its phase from liquid to solid, or vice versa. The different components of the aqueous medium may be arranged to provide the necessary phase changes over different parts of the desired temperature range to enhance the thermal storage characteristics of the system.

Thus a relatively small system with a small mass of materials may provide a relatively large thermal capacity with a relatively high heat exchange rate. Moreover, the system may be operated within the desired heat exchange and heat storage cycle without the need for high capacity heating or refrigeration means.

The refrigeration or heating means may be operated at efficient, full loads because a lower capacity refrigeration or heating means may be operated at full load and the thermal energy stored, even when the refrigeration or heating requirement is low or non-existent.

The cell or enclosed body of thermal storage medium may be cooled or charged at a position remote from that at which its thermal storage properties are to be used. In this case the heat exchange fluid is passed through the cell at one location having the refrigeration or heating means and, at another location, the cell may be connected to a heat exchange fluid whereby the thermal storage capacity of the cell is utilised.

The thermal storage medium may be used at the relatively higher temperatures, for example for storage of heat for hot water heating purposes. For this purpose materials may be added to the aqueous medium to elevate the temperature at which the aqueous medium may boil or vaporize. Alternatively or in addition the medium may be contained in a pressurised envelope to provide such elevated temperature. As a further alternative the gas or vapour may be allowed to be generated and then contained in a receiver, possibly pressurised, in order to be able to utilise the latent heat of vaporisation and reverse the vaporisation process.

To illustrate the benefit of the invention tests have been conducted and the following is an example:-

Example

A thermal storage medium consisted of 73.64kg of activated alumina saturated and intimately mixed with 36.67kg of water.

The alumina was F200 alumina as supplied by Alcoa.

The water was obtained from public supply in Telford, England.

The activated alumina was in the form of spheroidal alumina having a mean size of 3mm diameter. It had been produced by heating aluminium trihydroxide to drive off the water according to the equation.

$$2A1(OH)_3 \rightleftharpoons Al_20_3 \text{ alumina (aluminium oxide)} + 3H_20 \text{ water}$$

The initially dry activated alumina was intimately mixed with the water in a calorimeter which consisted of an insulated container in which were laid a series of parallel conduits for heat exchange fluid. The thermal storage medium was located within the container to surround the conduits and heat exchange fluid was passed along the conduits to change the temperature of the medium over the range -20°C to +42°C in thirty hours. During these temperature changes the amount of heat required to bring about the changes in temperature was measured.

The measured heat input to raise the temperature of the alumina/water mixture from -20°C to +42°C in thirty hours was 28.37kw.

This heat input can be compared with the calculated heat requirement for raising the temperature of dry alumina added to the heat requirement for water, through the same temperature range, using the known specific heat of the components and the latent heat of fusion of water. Thus using the following data:-

Specific heat of water below freezing
- 2.095 kj/kg/°C.

Specific heat of alumina
- 0.4 kj/kg°C.

Latent heat of fusion of water
- 335kj/kg.

Specific heat of water above freezing
- 4.187kj/kg°C.

The total theoretical heat requirement for raising the temperature from -20°C to 0°C is:-

| | |
|---|---|
| Water 36.67kg x 2.095kj/kg/°C x 20 = | 1536.47kj |
| Alumina 73.64kg x 0.4kj/kg/°C x 20 = | 589.12kj |
| Total | 2125.59kj |

The total heat requirement due to the latent heat of fusion is:-

| | |
|---|---|
| Water 36.67kg x 335kj/kg | = 12284.45kj |
| Alumina | NIL |

The total theoretical heat requirement for raising the temperature from 0°C to 42°C is:-

| | | |
|---|---|---|
| Water 36.67kg x 4.187kj/kg/°C x 42 | = | 6448.57kj |
| Alumina 73.64kg x 0.4kj/kg/°C x 42 | = | 1237.15kj |
| Total | | 7685.72 kj |

Therefore the total comparable heat requirement is:-

2125.59 + 12284.45 + 7685.72 = 22095.76kj.

In thirty hours this would require a heat input of 6.137kw.

This compares with an actual heat input requirement of the alumina mixed with water of 28.37kw.

Thus it is shown that 20.233kw of the heat input can be attributed to characteristics of the thermal storage medium and to enthalpy arising from a chemical reaction within the mixture. It has been found that the endothermic/exothermic reversible reaction is not specific to a given temperature but is a continuous heat input/output over the specified temperature range.

Examples of an application of the thermal storage medium in a thermal storage system will now be described with reference to the drawings in which:-

Figure 1 is a sectional plan view of a thermal storage cell,

Figure 2 is a sectional side elevation of the cell of Figure 1,

Figure 3 is a schematic diagram showing the incorporation of a thermal storage cell in a thermal storage system,

Figure 4 is a diagram of an alternative thermal storage system,

Figure 5 is a schematic diagram showing the use of a thermal storage cell at a thermal storage charing station,

Figure 6 is a schematic diagram showing a thermal storage cell when in use at refrigeration location, and

Figure 7 is a perspective view of a further form of thermal storage cell.

Referring to the drawings and firstly to Figures 1 and 2 a thermal storage cell 10 is shown which may be of a size according to the thermal storage capacity required. Moreover the cell may be associated with other cells in a series or parallel arrangement to provide flexibility. The cell 10 is an insulated enclosure having insulated sides 11 and the enclosure contains a plurality of serpentine or embossed plate coils 19 for heat exchange fluid, which coils are series or parallel connected.

The spaces between the walls 11 and the coils 19 are filled with particulate, granular or spheroidal activated alumina 15. Sintered alumina or other suitable material of smaller size, such as powder, may fill the spaces between the bodies of activated alumina. Water on its own or water and material to alter the temperature at which a phase change of the water takes place, such as sodium chloride, is added to the alumina so as to be in intimate contact with the alumina.

The coils 19 are supported side by side and embedded in the alumina and aqueous medium, and in the illustrated arrangement the coils are connected in parallel to common headers 17 and 18 for reverse return to balance flows, or the coils may be connected in series to one another.

Thus the cell provides a thermal storage unit in which thermal storage medium comprising the activated alumina and the aqueous medium is cooled or heated by passage of the heat exchange fluid through the coils acting as a coolant. The cell after charging can then be used as a source of cooling or heating capacity by passing heat exchange fluid therethrough to remove the charge from the medium.

Referring now to Figure 3 a cell 10 is shown in an installation including refrigeration means 20 communicating with the cell 10 to pass coolant around the coils 19. A three-way valve 21 controls the flow of heat exchange fluid through the cell 10, through a heat load 22 and via a pump 23 back to the refrigeration means 20. Operation of the valve 21 enables the installation to operate to cool the cell 10 only and/or to pass coolant through the heat load 22. The refrigeration means 20 may be replaced by a source of heat to heat the storage medium.

Referring to Figure 4 a heat exchange cell 10 is incorporated into a chiller 30 and primary refrigerant is used for transferring heat to the cell 10. A flooded type heat exchanger 31 is added to enable cooling to take place in the thermal storage medium 15, and the exchanger 31 is connected in series with an evaporator 32. Changeover valves 33 enable a refrigeration compressor 34 to cool the cell during charging. By this means the system has increased efficiency. Fluids such as glycol are not required in the secondary coolant circuit if

the application of the system does not require it, for example if the system is providing chilled water at +5°C.

Referring now to Figures 5 and 6 an installation is shown in which the cell 10 is charged at a location different from the location at which its heat storage capacity is utilised. In Figure 5 the cell is connected to refrigeration means or heat generation means 20 through releasable connectiions 25 whereby coolant or heating fluid is passed through the cell by a pump 23.

After release of the connections 25 the cell 10 may be moved to the other location, Figure 6, at which the cell is connected releasably to a load 22 which requires to be cooled or heated and heat exchange fluid is passed from the cell through the load by a pump 26 transferring heat or cold from the load to the cell.

The location at which the cooling or heating effect of the cell is utilised may be remote from the refrigeration or heating means 20 in an inaccessible place.

The releasable connections will incorporate suitable self-closing valves for retaining the heat exchange fluid when the cell is disconnected.

After depletion of the cooling or heating effect of the cell the cell is recharged at the refrigeration location.

It will be appreciated that the thermal storage medium of the invention may be located and arranged in a different manner to that described with provision for a heat exchange fluid from refrigeration or heating means to cool or heat the medium. A different heat exchange medium may be used to deplete or increase the thermal storage capacity of the medium simultaneously or at a different time from the cooling or heating operation.

There are many applications of the thermal storage medium in a refrigeration mode or in a heating mode.

As an example in the refrigeration mode the thermal storage medium can be used in food storage or processing. In a food storage system, for example in a retail unit, a central refrigeration plant may be utilised. The demand on the refrigeration plant changes between opening and closing hours so the thermal storage medium can be used in a thermal storage system in the central refrigeration plant to store the thermal requirements of the individual refrigeration units in the purchasing areas of the retailing unit.

The supply of coolant for the food refrigeration units is from the thermal storage system and such coolant may be different coolant from that supplied by the refrigeration plant to the storage system.

Referring to Figure 7 the thermal storage medium can also be used in a closed envelope or package 40 as coolant after cooling in a refrigerated location, the package being subjected directly to such refrigeration. Such a cooled package would find use as an 'ice pack' for sports injuries or otherwise to provide a long life source of coldness. The package 40 may be insulated over one side at 40A which is the side away from the side to be applied to the injured area. The envelope is made of flexible material to conform to the desired shape.

Such a package 40 can also find application as a heat source, for example in keeping food hot.

## Claims

1. A method of storing thermal energy which comprises passing fluid in heat exchange relationship through a mass of thermal storage medium including activated alumina combined with an aqueous medium at a temperature whereby to cause the water content of the aqueous medium to be associated with and disassociated from the activated alumina in an enthalpy change.

2. A method according to claim 1 wherein the temperature of the thermal storage medium is in the range up to 200°C.

3. A method according to claim 1 or 2 wherein the aqueous medium includes water constituting up to 100% by weight of the activated alumina.

4. A method according to claim 3 wherein the water constitutes up to 70% by weight of the activated alumina.

5. A method according to claim 1, 2, 3 or 4 wherein the aqueous medium includes material whereby the temperature at which a phase change of the water takes place is altered.

6. A method according to claim 5 wherein said material is selected from glycol, sodium chloride and clathrate.

7. A method according to any one of the preceding claims wherein the activated alumina is formed by subjecting aluminium trihydroxide to heat in the equation:-

$$2Al(OH)_3 \rightleftharpoons Al_20_3 + 3H_20$$

whereby the activated alumina is aluminium oxide having the facility to be associated or disassociated with water by the addition or removal of heat.

8. A method according to any one of the preceding claims wherein the temperature range includes one or both of the fusion and vaporisation phase changes.

9. A method according to any one of the preceding claims wherein the activated alumina is in divided particulate, granular or spheroidal form having a size in the range 1mm to 10 cms.

10. A thermal storage medium for a thermal storage system which medium comprises activated alumina and an aqueous medium intimately associated with the activated alumina of which the water content of the aqueous medium is in the proportion 10-100% by weight of the activated alumina.

11. A medium according to claim 10 wherein the activated alumina is in divided particulate, granular or spheroidal form having a size in the range 1mm to 10 cms.

12. A medium according to claim 10 or 11 comprising sintered alumina interspersed within the activated alumina to occupy voids between the activated alumina particles.

13. A medium according to any one of claims 10-12 wherein the aqueous medium includes a material whereby the fusion and/or vaporisation temperature of the medium is changed.

14. A thermal storage system which comprises a mass of thermal storage medium enclosed within an envelope or container and having heat exchange means whereby heat is exchanged with the mass of thermal storage medium, the thermal storage medium comprising activated alumina and aqueous medium in intimate association with the activated alumina, whereby upon heat exchange with the mass thermal energy is transferred to and from the mass utilising enthalpy in the mass.

15. A thermal storage system according to claim 14 wherein the container is an insulated container for the thermal storage medium and includes conduits for heat exchange fluid material to pass through the thermal storage medium.

16. A system according to claim 15 wherein fluid in the conduits communicates with a source of thermal energy to heat or cool the thermal storage medium.

17. A system according to claim 14, 15 or 16 wherein the container is chargeable with thermal energy at a location remote from its discharge location.

18. A system according to any one of claims 15-17 wherein the container has releasable inlet and outlet connections for the admission of heat exchange fluid to the conduits.

19. A system according to claim 1 wherein the source of thermal energy is refrigeration means and the primary refrigerant is passed through said conduits.

**Patentansprüche**

1. Verfahren zur Speicherung thermischer Energie, das den Durchfluß von Fluidum im Wärmeaustauschverhältnis durch eine Masse thermischen Speichermediums, einschließlich mit einem wäßrigen Medium kombinierter aktivierter Tonerde bei einer Temperatur umfaßt, wodurch der Wassergehalt des wäßrigen Mediums veranlaßt wird, sich in einer Enthalpieänderung mit der aktivierten Tonerde zu assoziieren bzw. von der aktivierten Tonerde zu dissoziieren.

2. Verfahren nach Anspruch 1, in dem sich die Temperatur des thermischen Speichermediums im Bereich bis zu 200°C befindet.

3. Verfahren nach Anspruch 1 oder 2, in dem das wäßrige Medium Wasser einschließt, das bis zu 100 Gew.-% der aktivierten Tonerde ausmacht.

4. Verfahren nach Anspruch 3, in dem das Wasser bis zu 70 Gew.-% der aktivierten Tonerde ausmacht.

5. Verfahren nach Anspruch 1, 2, 3 oder 4, in dem das wäßrige Medium Material einschließt, wodurch die Temperatur, bei der ein Phasenwechsel des Wassers stattfindet, verändert ist.

6. Verfahren nach Anspruch 5, in dem das Material unter Glycol, Natriumchlorid und Clathrat gewählt wird.

7. Verfahren nach einem der vorangegangenen Ansprüche, in dem die aktivierte Tonerde durch Erhitzen von Aluminiumtrihydroxid bei der folgenden Gleichung gebildet wird: -

$$2\,Al(OH)_3 \rightleftharpoons Al_2O_3 + 3\,H_2O$$

wobei die aktivierte Tonerde Aluminiumoxid ist, das die Möglichkeit besitzt, durch Zufuhr oder Entfernung von Wärme mit Wasser assoziiert oder dissoziiert zu werden.

8. Verfahren nach einem der vorangegangenen Ansprüche, in dem der Temperaturbereich eine oder beide der Schmelz- und Verdampfungsphasenänderungen einschließt.

9. Verfahren nach einem der vorangegangenen Ansprüche, in dem die aktivierte Tonerde sich in verteilter Teilchen-, granulierter oder sphäroidaler Form befindet, die eine Größe im Bereich von 1 mm bis 10 cm besitzt.

10. Thermisches Speichermedium für ein thermisches Speichersystem, wobei das Medium aktivierte Tonerde und ein wäßriges Medium umfaßt, das innig mit der aktivierten Tonerde assoziiert ist, in welchem der Wassergehalt des wäßrigen Mediums im Verhältnis von 10 - 100 Gew.-% bezogen auf die aktivierte Tonerde vorliegt.

11. Medium nach Anspruch 10, in dem die aktivierte Tonerde in verteilter Teilchen-, granulierter oder sphäroidaler Form vorliegt, die eine Größe im Bereich von 1 mm bis 10 cm besitzt.

12. Medium nach Anspruch 10 oder 11, das Sintertonerde enthält, die zum Ausfüllen von Hohlräumen zwischen den Teilchen aktivierter Tonerde in der aktivierten Tonerde verteilt ist.

13. Medium nach einem der Ansprüche 10 bis 12, in dem das wäßrige Medium ein Material einschließt, wodurch die Schmelz- und/oder Verdampfungstemperatur des Mediums verändert ist.

14. Thermisches Speichersystem, das eine Masse thermischen Speichermediums enthält, die in einem Mantel oder Behälter eingeschlossen ist und die eine Wärmeaustauschvorrichtung besitzt, wodurch Wärme mit der Masse thermischen Speichermediums ausgetauscht wird, wobei das thermische Speichermedium aktivierte Tonerde und wäßriges Medium in inniger Assoziation mit der aktivierten Tonerde umfaßt, wodurch beim Wärmeaustausch mit der Masse unter Nutzung der Enthalpie in der Masse thermische Energie auf die und von der Masse übertragen wird.

15. Thermisches Speichersystem nach Anspruch 14, in dem der Behälter ein isolierter Behälter für das thermische Speichermedium ist und Rohrleitungen für das zum Wärmeaustausch bestimmte Fluidumsmaterial zum Durchfluß durch das thermische Speichermedium einschließt.

16. System nach Anspruch 15, in dem Fluidum in den Rohrleitungen mit einer Quelle thermischer Energie zum Erhitzen oder Kühlen des thermischen Speichermediums in Verbindung steht.

17. System nach Anspruch 14, 15 oder 16, in dem der Behälter an einem von seinem Entladungsort entfernten Ort mit thermischer Energie aufladbar ist.

18. System nach einem der Ansprüche 15 bis 17, in dem der Behälter lösbare Einlaß- und Auslaßanschlüsse für die Zuleitung von Wärmeaustauschfluidum an die Rohrleitungen besitzt.

19. System nach Anspruch 1, in dem die Quelle thermischer Energie eine Kühlvorrichtung ist und das Hauptkältemittel durch diese Rohrleitungen geleitet wird.

## Revendications

1. Procédé de stockage d'énergie thermique, qui comprend le fait de faire passer un fluide en relation d'échange thermique à travers une masse d'un milieu de stockage thermique englobant de l'alumine activée en combinaison avec un milieu aqueux à une température telle qu'elle fait en sorte d'associer la teneur en eau du milieu aqueux avec l'alumine activée et de l'en dissocier dans un échange enthalpique.

2. Procédé selon la revendication 1, dans lequel la température du milieu de stockage thermique se situe dans un domaine allant jusqu'à 200°C.

3. Procédé selon la revendication 1 ou 2, dans lequel le milieu aqueux englobe de l'eau constituant jusqu'à 100% en poids de l'alumine activée.

4. Procédé selon la revendication 3, dans lequel l'eau constitue jusqu'à 70% en poids de l'alumine activée.

5. Procédé selon la revendication 1, 2, 3 ou 4, dans lequel le milieu aqueux englobe une matière par laquelle la température à laquelle l'eau subit un changement de phase est modifiée.

6. Procédé selon la revendication 5, dans lequel ladite matière est choisie parmi le glycol, le chlorure de sodium et le clathrate.

7. Procédé selon l'une quelconque des revendications précédentes, dans lequel l'alumine activée est formée en soumettant du trihydroxyde d'aluminium à la chaleur dans l'équation :

$$2Al(OH)_3 \rightleftharpoons Al_2O_3 + 3H_2O$$

dans laquelle l'alumine activée est de l'oxyde d'aluminium ayant la possibilité d'être associé avec l'eau ou dissocié de cette dernière par addition ou retrait de chaleur.

8. Procédé selon l'une quelconque des revendications précédentes, dans lequel le domaine de température englobe un des changements de phase par fusion et par évaporation ou les deux.

9. Procédé selon l'une quelconque des revendications précédentes, dans lequel l'alumine activée a une forme particulaire divisée, granulaire ou sphérique dont la dimension se situe dans le domaine de 1 mm à 10 cm.

10. Milieu de stockage thermique pour un système de stockage thermique, ledit milieu comprenant de l'alumine activée et un milieu aqueux étroitement associé avec l'alumine activée, la teneur en eau du milieu aqueux se situant dans la proportion de 10-100% en poids de l'alumine activée.

11. Milieu selon la revendication 10, dans lequel l'alumine activée a une forme particulaire divisée, granulaire ou sphérique dont la dimension se situe dans le domaine de 1 mm à 10 cm.

12. Milieu selon la revendication 10 ou 11, comprenant de l'alumine frittée entremêlée au sein de l'alumine activée pour occuper les vides ménagés entre les particules d'alumine activée.

13. Milieu selon l'une quelconque des revendications 10 à 12, dans lequel le milieu aqueux englobe une matière par laquelle la température de fusion et/ou d'évaporation du milieu est modifiée.

14. Système de stockage thermique qui comprend une masse d'un milieu de stockage thermique enfermée dans une enveloppe ou dans un receptacle et comportant un moyen d'échange thermique par lequel de la chaleur est échangée avec la masse du milieu de stockage thermique, le milieu de stockage thermique comprenant de l'alumine activée et un milieu aqueux en association étroite avec l'alumine activée, grâce à quoi lors de l'échange de chaleur avec la masse, de l'énergie thermique est transférée à et à partir de la masse en utilisant l'enthalpie régnant dans la masse.

15. Système de stockage thermique selon la revendication 14, dans lequel le réceptacle est un réceptacle isolé pour le milieu de stockage thermique et englobe des conduits pour que la matière fluide d'échange de chaleur passe à travers le milieu de stockage thermique.

16. Système selon la revendication 15, dans lequel le fluide dans les conduits communique avec une source d'énergie thermique pour chauffer ou refroidir le milieu de stockage thermique.

17. Système selon la revendication 14, 15 ou 16, dans lequel le receptacle peut être chargé avec de l'énergie thermique à un endroit situé à distance de son endroit de décharge.

18. Système selon l'une quelconque des revendications 15 à 17, dans lequel le réceptacle comporte des raccords amovibles d'entrée et de sortie pour l'admission du fluide d'échange thermique dans les conduits.

19. Système selon la revendication 1, dans lequel la source d'énergie thermique est un moyen de réfrigération, le réfrigérant primaire passant à travers lesdits conduits.

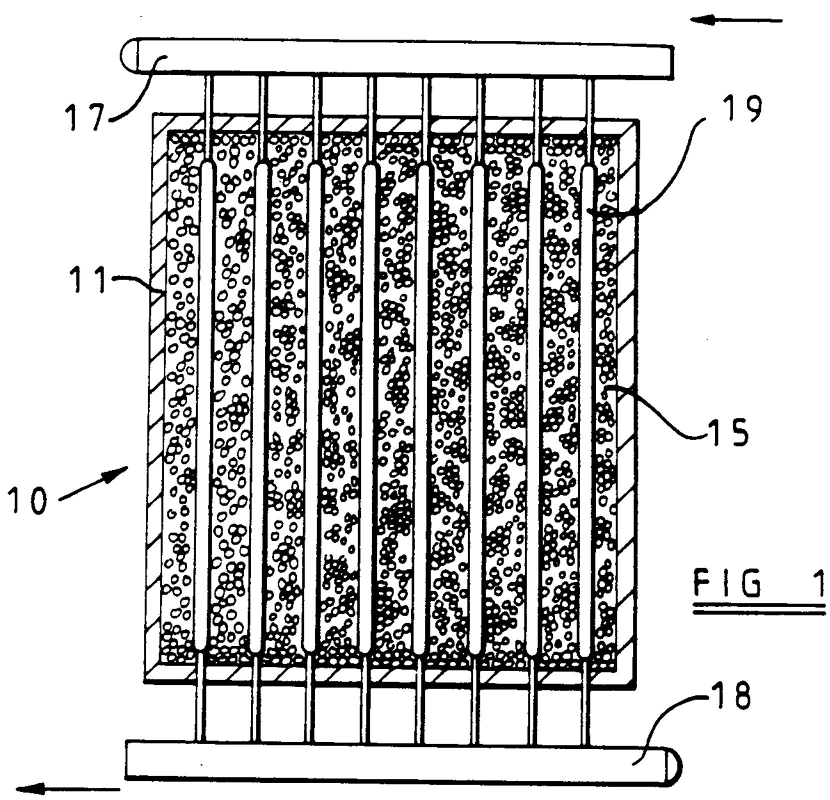


FIG 1

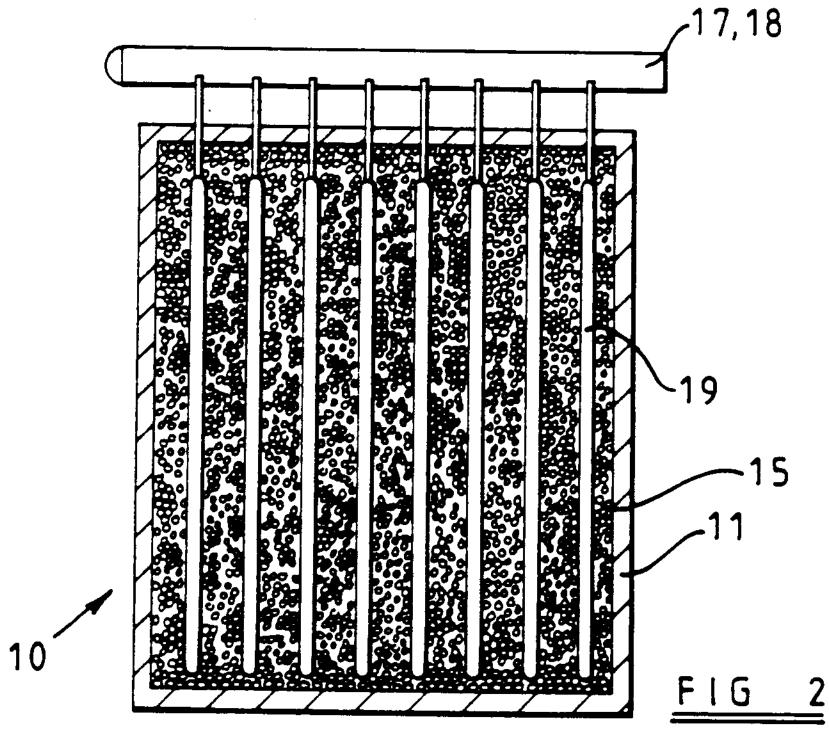


FIG 2

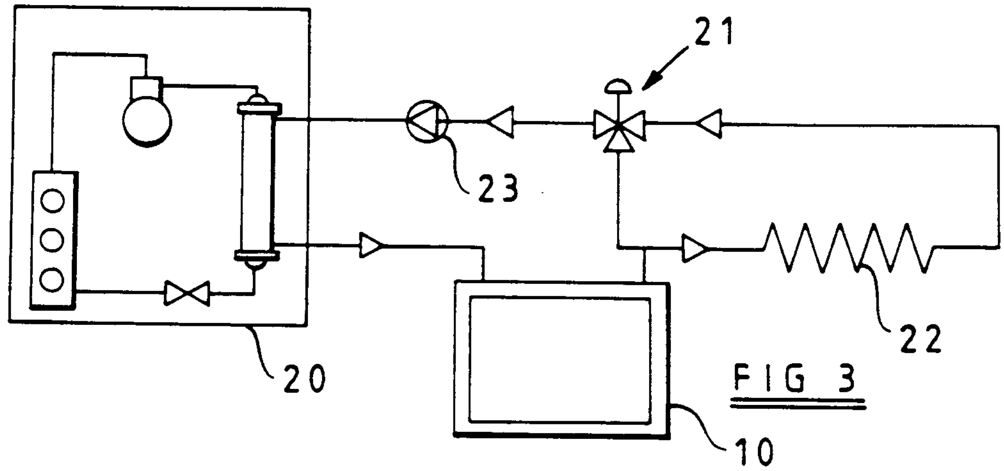


FIG 3

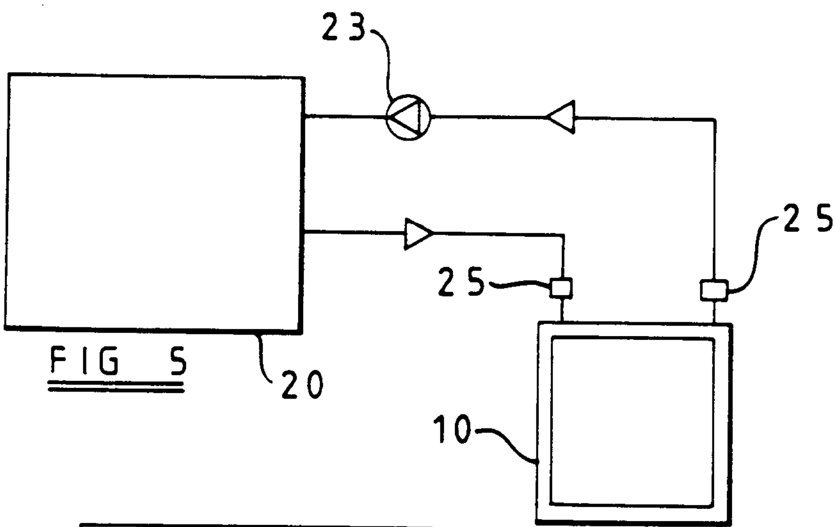


FIG 5

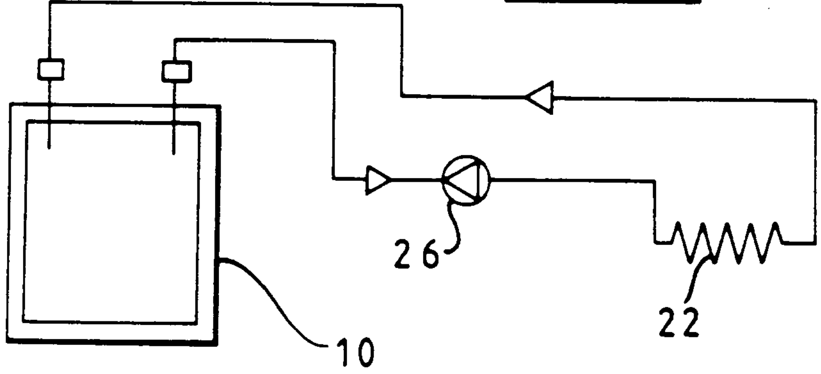


FIG 6

FIG 4

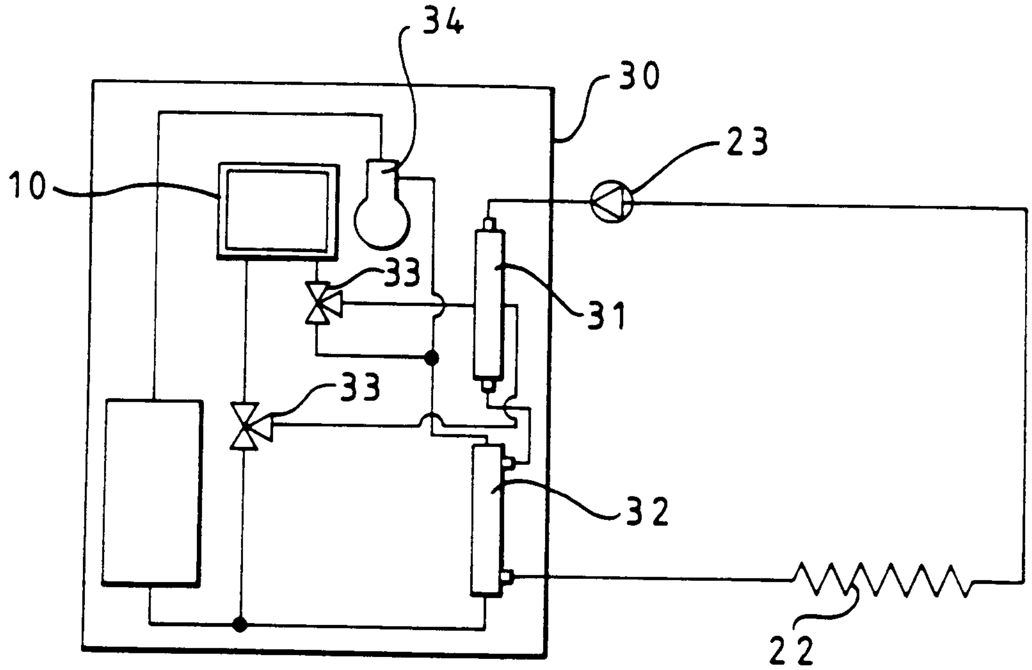


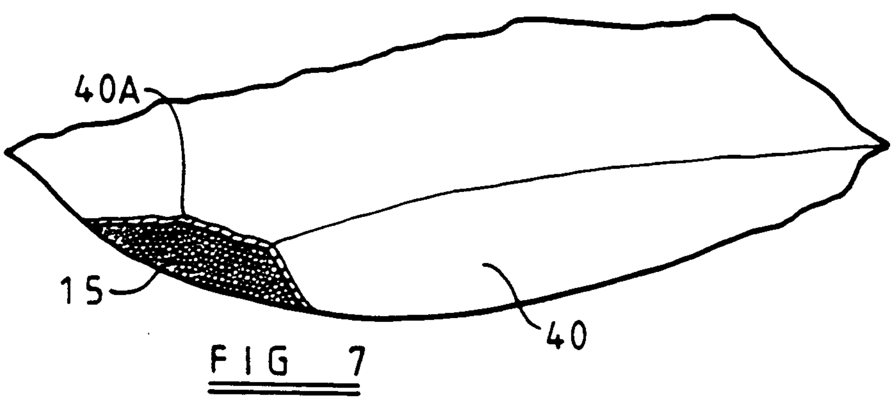


FIG 7